# EUROPÄISCHE PATENTANMELDUNG

(11) **EP 0 824 091 A1**
(43) Veröffentlichungstag der Anmeldung: **18.02.1998**
(21) Anmeldenummer: 97113717.9
(22) Anmeldetag: 08.08.1997
(51) Int. Cl.: C03C 17/36

(54) **Schichtsystem für gebogene und/oder gehärtete Glasscheiben**

(30) Priorität: 15.08.1996 DE 19632788
(71) Anmelder: FRAUNHOFER-GESELLSCHAFT ZUR FÖRDERUNG DER ANGEWANDTEN FORSCHUNG E.V., 80636 München (DE); Arcon Flachglas-Veredlung GmbH & Co. Beschichtungstechnik KG, 91555 Feuchtwangen (DE)
(72) Erfinder: Hartung, Ullrich, Dr., 01129 Dresden (DE); Schneider, Siegfried, 01445 Radebeul (DE); Kirchhoff, Volker, 01324 Dresden (DE); Söder, Bernhard, Dr., 91639 Wolframs-Eschenbach (DE)

(57) **Zusammenfassung**

Schichtsysteme für gebogene und/oder gehärtete wärmereflektierende Glasscheiben mit hoher Transmission im sichtbaren Spektralbereich bestehen in der Regel aus Metalloxidschicht - Blocker - Silberschicht - Blocker - Metalloxidschicht. Die bisher zum Schutz der Silberschicht verwendeten Blocker sind vielfach chemisch unbeständig, zu teuer oder besitzen eine zu große Absorption. Das neue Schichtsystem soll besonders während des Herstellungsprozesses die Silberschicht vor Korrosion und Zerstörung schützen, die Nachteile anderer Blocker vermeiden und kostengünstig herstellbar sein.

Das Schichtsystem, bestehend aus dielektrischer Schicht - AlMgMn-Schicht - Silberschicht - AlMgMn-Schicht - dielektrischer Schicht, wird auf ebene Glasscheiben aufgebracht, welche anschließend gebogen und/oder gehärtet werden.

Derartige Schichtsysteme finden als Wärmedämm- und Sonnenschutzbeschichtungen auf Architekturglas oder im Fahrzeugbau, z.B. für Windschutzscheiben, Verwendung.

## Beschreibung

Die Erfindung betrifft ein wärmereflektierendes Schichtsystem für gebogene und/oder gehärtete Glasscheiben, welches eine hohe Transmission im Bereich des sichtbaren Lichtes und eine hohe Reflexion im Bereich der Strahlung mit größerer Wellenlänge besitzt. Derartige Schichtsysteme finden als Wärmedämm- und Sonnenschutzbeschichtungen auf Architekturglas oder im Fahrzeugbau, z.B. für Windschutzscheiben, Verwendung.

Bei derartigen Anwendungen wird das Schichtsystem auf die ebenen Glasscheiben, d.h. Flachglas aufgebracht. Anschließend wird das beschichtete Flachglas bis kurz unterhalb seiner Erweichungstemperatur erwärmt und durch schockartiges Abkühlen gehärtet. Das Biegen der Glasscheiben erfolgt zwischen dem Erwärmen und dem Abschrecken.

Es sind eine Vielzahl solcher wärmereflektierenden Schichtsysteme bekannt, bei denen die Glasscheiben nach dem Aufbringen des Schichtsystems gebogen und/oder gehärtet werden. Für die Wärmereflektion werden üblicherweise eine oder mehrere Edelmetallschichten, z.B. Silber, aufgrund ihres guten selektiven Reflexionsvermögens schon bei geringen Schichtdicken, verwendet.
Weiterhin ist allgemein bekannt, zur Verbesserung der optischen Eigenschaften hochbrechende dielektrische Schichten oberhalb und unterhalb der Silberschicht anzuordnen. Beim Aufbringen von z.B. einer Metalloxidschicht auf das Silber und beim Biegen und/oder Härten der beschichteten Glassubstrate mit dem damit verbundenen Erwärmen kommt es zur Oxidation der Silberschicht und zur Diffusion des Silbers in die Metalloxidschicht. Die Oxidation ist dadurch bedingt, daß zum einen beim reaktiven Aufbringen der Metalloxidschicht der eingelassene Sauerstoff mit dem Silber reagiert und daß zum anderen beim Erwärmen der beschichteten Glasscheiben der Sauerstoff der Metalloxidschicht aktiviert wird und sich ebenfalls mit dem Silber verbindet. Zusätzlich wird die Diffusion des Silbers erhöht, wodurch die Dicke der Silberschicht abnimmt. Durch Oxidation und Diffusion wird das Reflexionsvermögen der beschichteten Glasscheiben verringert.
Zur Vermeidung dieser Nachteile ist es bekannt, die Silberschichten durch geeignete Materialien, im weiteren mit Blocker bezeichnet, vor der teilweisen Zerstörung, vorrangig durch Oxidation, zu schützen, indem diese Blocker als Schicht unterhalb und/oder oberhalb der Silberschicht angeordnet werden.

Es ist bekannt, als Blocker Metallegierungen wie CrNi (DE 38 25 671), nichtoxidierte bzw. beim Aufbringen teiloxidierte Metalle wie Al, Ti, Zn, Ta und Zr (US 4,894,290) oder Nitridverbindungen (EP 0 546 302) zu verwenden. Diese Blocker werden von dem eingelassenen oder aktivierten Sauerstoff teiloxidiert und binden so den Sauerstoff. Dadurch soll die Silberschicht geschützt werden.

Die bisher bekannten und verwendeten Blocker besitzen jedoch verschiedene Nachteile hinsichtlich der Produktivität, der chemischen Beständigkeit, der Langzeitstabilität und der optischen Eigenschaften.
Beispielsweise besitzt CrNi eine so hohe Absorption, daß das Transmissionsvermögen bei vorgegebenem Reflexionsgrad in nicht vernachlässigbarer Weise beeinträchtigt wird. Tantal als Schichtmaterial ist sehr teuer. Aluminium ist zwar ein preisgünstiges Schichtmaterial, besitzt aber keine ausreichende chemische Beständigkeit. Außerdem neigt Aluminium zur Diffusion, was sich in der Verschlechterung der optischen Eigenschaften bemerkbar macht. Der Einsatz von Titan als Blocker hat den Nachteil, daß bei längeren Erwärmungszeiten die Schutzfunktion von Titan abnimmt, d.h. die Silberschicht wird nicht mehr ausreichend vor Oxidation geschützt.

Es ist weiterhin ein Wärmedämmschichtsystem für ebene Glasscheiben bekannt (DD 288 822 A5). Dabei wird auf einer metalloxidischen Grundschicht, vorzugsweise aus SnO₂, eine reflektierende Silberschicht im Vakuum aufgestäubt. Auf diese Silberschicht wird eine sehr dünne, 1 nm bis 5 nm dicke metallische Zwischenschicht aufgestäubt. Diese oberhalb der Silberschicht angeordnete metallische Zwischenschicht besteht entweder aus AlMg, AlMgMn oder TiPd. Abschließend wird eine Deckschicht aus einem Metalloxid, vorzugsweise SnO₂, aufgestäubt.
Dieses Wärmedämmschichtsystem besitzt eine gute Langzeitbeständigkeit gegenüber Feuchtigkeitsbelastung und Sonneneinstrahlung, so daß es hauptsächlich dann zum Einsatz kommt, wenn ebene Glasscheiben vor Feuchtigkeit geschützt werden sollen und die Temperaturbelastung über normale Bedingungen, wie Sonneneinstrahlung nicht hinausgehen.

Der Erfindung liegt die Aufgabe zugrunde, ein Schichtsystem für zu biegendes und/oder zu härtendes Flachglas zu schaffen. Das Schichtsystem soll eine hohe Transmission im Bereich des sichtbaren Lichtes und eine hohe Reflexion für Strahlung mit größeren Wellenlängen besitzen und langzeitstabil sein. Die wärmereflektierende Schicht soll besonders während des Herstellungsprozesses vor Zerstörung und Korrosion, wie z.B. Oxidation, geschüzt sein. Weiterhin soll das Schichtsystem die Mängel des Standes der Technik vermeiden und kostengünstig herstellbar sein.
Erfindungsgemäß wird die Aufgabe nach den Merkmalen des Patentanspruchs 1 gelöst. Weitere vorteilhafte Ausgestaltungen sind in den Ansprüchen 2 bis 8 beschrieben.

Es wurde gefunden, daß die Aufgabe mit einem auf einer Glasscheibe angeordneten Schichtsystem, bestehend aus dielektrischer Schicht - metallischer Zwischenschicht - Silberschicht - metallischer Zwischenschicht - dielektrischer Schicht, gelöst wird. Die metallische Zwischenschicht ist jeweils eine 5 nm bis 10 nm dicke Schicht aus einer AlMgMn-Legierung. Obwohl AlMgMn-Legierungen bisher nur für ebene Glasscheiben und nur oberhalb von Silberschichten als sehr dünne Schutzschicht gegen eine Metalloxidschicht abgeschieden und zum Schutz vor hoher Feuchtigkeit verwendet wurden, zeigte sich überraschenderweise, daß AlMgMn-Legierungen auch als Blocker gegen dielektrische Schichten für Glasscheiben, die nach dem Beschichten gebogen und/oder gehärtet werden, einsetzbar sind. Dazu ist es erforderlich, daß AlMgMn als Blocker nicht nur oberhalb, sondern auch unterhalb der wärmereflektierenden Silberschicht angeordnet ist. Weiterhin wird diese Aufgabe nur gelöst, wenn außerdem diese metallische Zwischenschicht entgegen der Meinung der Fachwelt eine Mindestdicke von 5 nm bis 10 nm besitzt.
AlMgMn als Unter- und Oberschicht schützt die Silberschicht hauptsächlich vor Oxidation durch den freien Sauerstoff beim Aufbringen der abschließenden Metalloxidschicht und vor dem Sauerstoff, der beim Biegen und der dazu erforderlichen Erwärmung der Glasscheiben aktiviert wird. Der Schutz vor dem Einwirken des Sauerstoffs auf die Silberschicht erfolgt dadurch, daß dieser freie Sauerstoff gebunden wird, indem die metallischen Zwischenschichten aus AlMgMn teiloxidiert werden. Weiterhin wird die Silberschicht gegen Diffusion geschützt, so daß diese Schicht beim Erwärmen der Glasscheiben stabil bleibt und eine gute Langzeitbeständigkeit besitzt. So wird eine frühzeitige Korrosion vermieden.

Die Vorteile der Erfindung bestehen darin, daß die metallischen Zwischenschichten aus AlMgMn auch beim Biegen und/oder Härten mit dabei üblichen Temperaturen von z.B. über 700 °C beständig sind, die Silberschicht vor Korrosion und Zerstörung schützen, und damit als Blocker hervorragend für den Einsatz in Schichtsystemen für derartige Glasscheiben geeignet sind.
Weiterhin werden die Nachteile bekannter Blocker vermieden. So wird AlMgMn durch die Teiloxidation transparent und besitzt auch bei größeren Schichtdicken eine höhere Transmission als beispielsweise CrNi-Legierungen, bei denen die notwendigerweise dickere Schicht durch die Absorption der entstandenen CrNi-Oxidschicht zur Verringerung bei der Transmission führt.
Außerdem wird mit AlMgMn nicht nur die Diffusionsneigung von Aluminium vermieden, es wirkt außerdem diffusionshemmend, so daß es nicht nur als Blocker gegenüber Metalloxidschichten, sondern allgemein gegenüber dielektrischen Schichten einsetzbar ist.
Darüber hinaus ist AlMgMn ein sehr preiswertes Schichtmaterial, welches sich leicht zerstäuben läßt. Der Beschichtungsprozeß wird damit einfach und kostengünstig.
Durch die gute Langzeitstabilität von AlMgMn gegenüber Feuchtigkeit und Temperaturbelastung wird die Silberschicht einerseits schon während der Zeit vom Beschichten bis zum Zusammenbau der Glasscheiben zum Scheibenverbund geschützt und andererseits besitzen die mit diesem Schichtsystem beschichteten Glasscheiben eine lange Lebensdauer.
Besonders vorteilhafte Ausgestaltungen der Erfindung bestehen darin, die Schichtfolge AlMgMn - Silber - AlMgMn mehrfach anzuordnen, wobei die Schichtfolgen durch dielektrische Schichten getrennt sein können. Neben Metalloxidschichten können die dielektrischen Schichten auch aus Nitriden oder Karbiden bestehen.

An einem Ausführungsbeispiel wird die Erfindung näher erläutert.
Auf einer 4 mm dicken Floatglasscheibe wird in einer Vakuumbeschichtungsanlage ein Schichtsystem mit folgenden Schichten aufgebracht. Zuerst wird durch Zerstäuben eines Zinntargets und Einlassen von Sauerstoff eine 49 nm dicke Zinnoxidschicht aufgestäubt. Anschließend wird in einer zweiten Beschichtungskammer eine 8 nm dicke Schicht aus einer unter dem Namen Hydronalium bekannte AlMg4,5Mn-Legierung aufgestäubt. Danach wird als wärmereflektierende Schicht eine 15 nm dicke Silberschicht aufgestäubt. Im nächsten Schritt wird wieder eine 8 nm dicke Schicht aus Hydronalium aufgestäubt, bevor abschließend eine 53 nm dicke Zinnoxidschicht durch reaktives Zerstäuben, d.h. Zerstäuben eines Zinntargets mit gleichzeitigem Sauerstoffeinlaß, abgeschieden wird.
Die mit diesem Schichtsystem beschichtete Floatglasscheibe wird anschließend gehärtet, indem sie 4 Minuten bei 650 °C geheizt und danach schnell bis auf Raumtemperatur abgekühlt wird.
Liegt die Transmission vor dem Biegen und/oder Härten der Glasscheiben noch unter 60 %, so beträgt die Transmission nach dem Biegen und/oder Härten über 82 % bei einem Flächenwiderstand von 3,7 Ω/□.

## Patentansprüche

1. Schichtsystem für gebogene und/oder gehärtete Glasscheiben, bestehend aus dielektrischen Schichten, Zwischenschichten und mindestens einer Edelmetallschicht, **dadurch gekennzeichnet**, daß auf der ebenen Glasscheibe aufeinanderfolgend eine dielektrische Schicht, eine metallische Zwischenschicht, eine Silberschicht, eine weitere metallische Zwischenschicht und eine das Schichtsystem abschließende dielektrische Schicht aufgestäubt sind, und daß die metallischen Zwischenschichten aus einer AlMgMn-Legierung bestehen.

2. Schichtsystem nach Anspruch 1, **dadurch gekennzeichnet**, daß die metallischen Zwischenschichten aus AlMg4,5Mn bestehen.

3. Schichtsystem nach Anspruch 1 und 2, **dadurch gekennzeichnet**, daß die metallischen Zwischenschichten 5 nm bis 10 nm, vorzugsweise 6 nm bis 8 nm dick sind.

4. Schichtsystem nach Anspruch 1 bis 3, **dadurch gekennzeichnet**, daß die dielektrischen Schichten aus einem Oxid der Metalle Sn, Zn, Ti, Si oder Bi mit einer Dicke von 25 nm bis 70 nm gebildet sind.

5. Schichtsystem nach Anspruch 1 bis 3, **dadurch gekennzeichnet**, daß mindestens eine dielektrische Schicht aus mehreren unterschiedlichen Oxiden der Metalle Sn, Zn, Ti, Si oder Bi mit einer Gesamtdicke von 25 nm bis 100 nm gebildet sind.

6. Schichtsystem nach Anspruch 1 bis 5, **dadurch gekennzeichnet**, daß die Silberschicht 8 nm bis 20 nm dick ist.

7. Schichtsystem nach Anspruch 1 bis 6, **dadurch gekennzeichnet**, daß das Schichtsystem, bestehend aus der dielektrischen Schicht, der metallischen Zwischenschicht, der Silberschicht, der metallischen Zwischenschicht und der abschließenden dielektrischen Schicht, mehrfach übereinander angeordnet ist.

8. Schichtsystem nach Anspruch 1 bis 3, 6 und 7, **dadurch gekennzeichnet**, daß die dielektrischen Schichten, außer die abschließende dielektrische Schicht, aus Nichtoxiden, vorzugsweise SiN und AlN, mit einer Gesamtdicke von 25 nm bis 120 nm gebildet sind.
